# FASCICULE DE BREVET EUROPEEN

(11) **EP 2 126 228 B1**
(45) Date de publication et mention de la délivrance du brevet: **12.05.2010**
(21) Numéro de dépôt: 08761915.1
(22) Date de dépôt: 09.01.2008
(51) Int. Cl.: E03B 9/04, E03B 9/02, F16K 35/00

(54) **DISPOSITIF DE SECURISATION DES HYDRANTS D'INCENDIE PAR BLOCAGE DU CLAPET DU ROBINET VANNE**
VORRICHTUNG ZUR SICHERUNG VON HYDRANTEN DURCH VERRIEGELUNG DES SCHIEBERS EINES SCHIEBEVENTILS
DEVICE FOR SECURING FIRE HYDRANTS BY LATCHING THE GATE OF A GATE VALVE

(30) Priorité: 26.01.2007 FR 0752900
(43) Date de publication de la demande: 02.12.2009
(73) Titulaire: Vasconi, Bertrand, 62280 Saint Martin Les Boulogne (FR)
(72) Inventeur: Vasconi, Bertrand, 62280 Saint Martin Les Boulogne (FR)
(74) Mandataire: Laget, Jean-Loup
(86) Numéro de dépôt international: PCT/FR2008/050041
(87) Numéro de publication internationale: WO 2008/099102

(56) Documents cités:
- US-A- 4 280 525
- US-A- 6 058 957
- US-B1- 6 901 950

## Description

Le domaine de la présente invention est celui des moyens de lutte contre l'incendie et en particulier des bornes d'alimentation en eau, tels que les poteaux et les bouches d'incendie, réunis sous le terme générique d'hydrants.

Un poteau d'incendie est, comme son appellation l'indique, un poteau creux dans lequel est agencé un ensemble de commandes, et qui permet l'acheminement de l'eau, sous pression, en provenance du réseau principal d'alimentation, vers les agents chargés de la lutte contre l'incendie. Le poteau est muni de prises sur lesquelles les pompiers viennent brancher leurs tuyaux, qui sont obturées par des bouchons en dehors de leur période d'utilisation. Les commandes permettent grâce à un volant, fixe ou amovible, ou à une clé s'adaptant sur un embout de manoeuvre, de mouvoir le clapet d'un robinet vanne placé sur la conduite d'acheminement de l'eau, dont l'ouverture entraîne la mise à disposition de l'eau. Le poteau est très souvent enfermé dans un capot muni d'une porte à serrure pour tenter d'éviter des prélèvements intempestifs d'eau.

Une bouche d'incendie diffère quelque peu d'un poteau en ce qu'elle est intégrée complètement dans le sol de façon à être moins visible, mais elle reste quasiment identique dans son fonctionnement, à savoir qu'elle dispose d'une prise pour le branchement des tuyaux des pompiers et d'un embout de manoeuvre, sur lequel s'emboîte une clé, pour actionner le clapet et permettre à l'eau en provenance du réseau principal de s'écouler.

Chaque poteau, comme chaque bouche, est toujours précédé en amont, juste avant son branchement sur la conduite en provenance du réseau d'alimentation en eau, d'une « bouche à clé ». Celle-ci, désignée ainsi par abus de langage, est en fait un robinet d'isolement qui permet d'isoler l'hydrant du réseau principal. Pour cela, il convient d'insérer une clé adéquate dans la tête de la bouche à clé, de passer à travers le tube allongé qui la prolonge, pour atteindre et manoeuvrer le robinet d'isolement.

Le problème auquel sont fréquemment soumises les communes est le vol d'eau par un branchement abusif sur ces hydrants. Diverses solutions ont été proposées : voir par example US-A-4 280 525. Les solutions décrites dans les brevets US 6,901,950 et US 6,058,957, visent soit à empêcher la rotation du tube de commande du robinet vanne soit à interdire l'accès aux prises de branchements des tuyaux. Dans le premier cas il s'agit très souvent de serrures ou de caches placés sur l'écrou de commande du tube ou sur sa poignée de manoeuvre. Dans le second il s'agit de caches placés sur la prise et maintenus par une serrure. Aucune de ces solutions n'est réellement efficace car ces dispositifs sont en général positionnés à l'extérieur de l'hydrant et donc exposés à toutes sortes d'agressions, celles-ci pouvant aller jusqu'à l'arrachage ou la destruction pure et simple de la serrure et/ou du cache.

La présente invention a pour but de remédier à ces inconvénients en proposant un dispositif de blocage au niveau du clapet du robinet vanne ce qui empêche la rotation du tube de commande et la sortie de l'eau.

A cet effet, l'invention a pour objet un dispositif de sécurisation d'un hydrant d'incendie selon la revendication 1.

Un blocage au niveau du clapet du robinet vanne rend pratiquement impossible toute tentative de détérioration des moyens de sécurisation.

Avantageusement le moyen de verrouillage est un pêne commandé par une serrure dont le corps forme avec la canalisation une enceinte étanche.

On évite ainsi les risques de fuites au niveau du clapet.

Dans un mode particulier de réalisation la serrure est distante du pêne et le pêne est actionné en rotation par une canne sensiblement verticale, ladite canne étant commandée par ladite serrure.

Cette configuration permet d'actionner le pêne depuis le sol et de réaliser l'étanchéité tout en haut de la canalisation.

De façon préférentielle ladite serrure ne s'ouvre qu'en présence d'un signal magnétique ou électromagnétique fourni par une source extérieure.

On évite ainsi le détournement des clés et la diffusion de nombreuses copies.

De façon alternative le moyen de verrouillage est muni d'éléments ferromagnétiques et la canalisation porte un système d'actionnement par aimantation susceptible de déployer radialement ledit moyen de verrouillage.

Cette méthode de verrouillage alternative a l'avantage d'offrir de plus grandes possibilités de commande du dispositif de verrouillage et en particulier la commande à distance.

Avantageusement le moyen de verrouillage est un pêne commandé par une serrure et le mécanisme d'actionnement par aimantation et le mécanisme d'actionnement par la serrure sont tous deux prioritaires l'un par rapport à l'autre pour la fermeture.

Cette configuration permet une double sécurisation de l'hydrant.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue simplifiée en coupe d'un poteau d'incendie (figure la) et d'une bouche d'incendie (figure 1b) selon l'art antérieur;
- la figure 2 est une vue en coupe d'un robinet vanne équipé d'un dispositif de verrouillage selon un mode de réalisation de l'invention ;

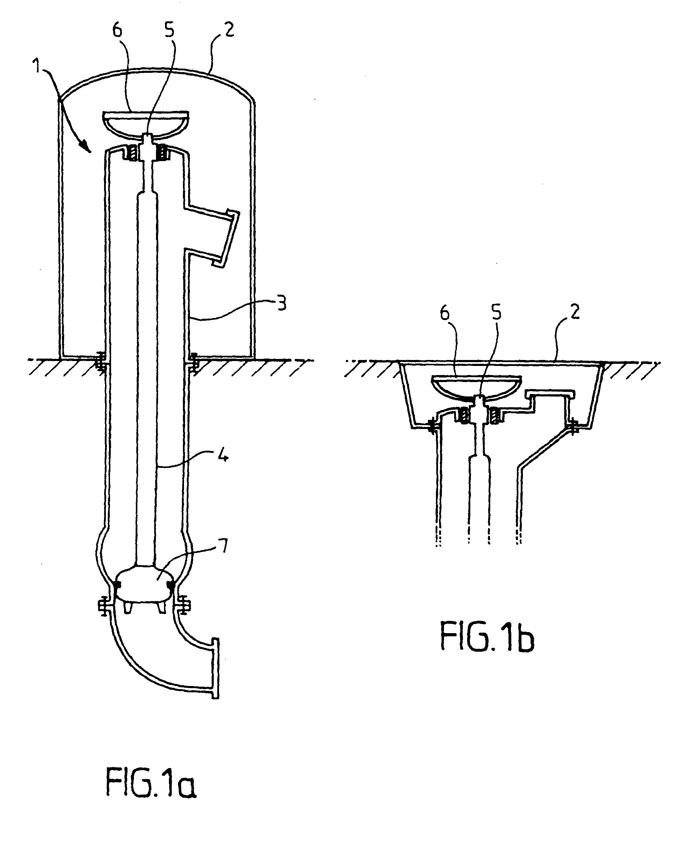

En se référant à la figure 1a, on voit un poteau d'incendie 1, enfermé dans un capotage 2, comprenant une canalisation 3 sensiblement verticale traversée par un tube de commande 4 dont l'extrémité supérieure a la forme d'un embout de manoeuvre mâle 5 sur lequel vient s'emmancher une poignée de commande fixe ou amovible 6. A l'extrémité inférieure le tube de commande porte une vanne 7 faisant robinet pour la libération de l'eau en provenance du réseau principal d'alimentation.

Sur la figure 1b, la situation est analogue pour la bouche d'incendie, les mêmes références désignant les mêmes éléments.

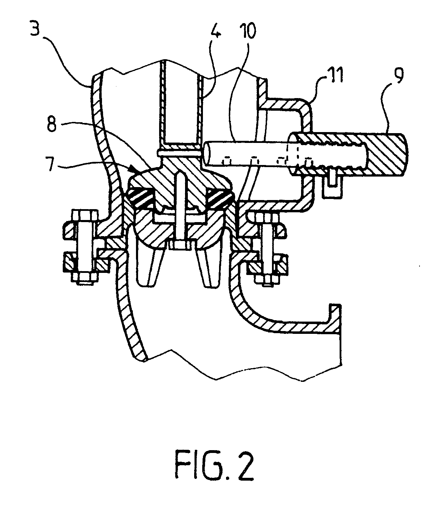

En se référant maintenant à la figure 2, on voit le robinet vanne d'un hydrant d'incendie tel qu'un poteau ou une bouche d'incendie, comprenant un clapet 7, équipé d'un joint d'étanchéité s'appuyant sur un siège faisant corps avec la canalisation 3. Ce clapet 7, positionné au bout du tube de commande 4 permet, par la rotation du tube, de commander l'ouverture ou la fermeture du robinet vanne. Une telle rotation déclenche de façon connue un mouvement de montée ou de descente de l'ensemble formé par le clapet 7 et le tube de commande 4 et la mise en service ou hors service de l'hydrant.

Sur le flanc de la canalisation 3 on voit un boîtier 11 schématisé, communiquant avec la canalisation 3 dans lequel est logé le corps 9 d'un dispositif de verrouillage, tel qu'une serrure. Cette serrure présente un moyen de verrouillage, tel qu'un pêne 10, susceptible de se déplacer de façon sensiblement horizontale entre une position de verrouillage, telle que représentée sur la figure 2, où le pêne vient sensiblement en butée contre le tube de commande 4 et une position de déverrouillage où le pêne est en retrait par rapport au tube de commande 4 et au clapet 7, de façon à laisser le libre déplacement de ce dernier de la position de fermeture du robinet vanne vers celle de pleine ouverture. Le clapet 7 présente sur sa partie supérieure 8 une face sensiblement plane ou tronconique, de façon à opposer une surface de blocage lorsque le pêne 10 est en position de verrouillage.

Le boîtier 11 a pour objet de créer une enceinte dans laquelle peut se mouvoir le pêne 10 sans mettre en danger l'étanchéité de la canalisation vis-à-vis de l'extérieur. Il peut s'agir, comme indiqué sur la figure 2, d'une verrue accolée à la canalisation 3 mais, plus communément, ce boîtier est confondu avec la canalisation 3, l'étanchéité étant alors ramenée en partie haute de l'hydrant. La serrure qui actionne le pêne se situe dans le premier cas au niveau du robinet vanne (version utilisable principalement pour les bouches d'incendie) et, dans le deuxième cas, elle est déportée dans le capotage 2 de l'hydrant, de façon à ce qu'on y ait accès malgré l'implantation souterraine du pêne (cas des poteaux d'incendie). Le pêne est alors actionné par une canne verticale qui fait le lien mécanique entre lui et la serrure.

Dans un mode particulier de réalisation la serrure est du type "batteuse", c'est-à-dire que le pêne a la forme d'une plaquette, tournant sur elle-même autour d'un axe perpendiculaire à son plan, matérialisé par la canne.

De façon alternative à la mise en place d'une serrure classique il est possible d'installer en bout de la canne qui commande le pêne un moyen de verrouillage magnétique, ou électromagnétique, du type de celui mis en place dans les robinets d'isolement placés en amont des compteurs d'eau chez les particuliers. Ce verrouillage magnétique a pour particularité de se mettre automatiquement en fonction en cas de prélèvement d'eau hors compteur (rupture de la liaison entre le robinet et le compteur) et de n'être désactivé que par l'approche d'une carte magnétique transmettant un code d'accès correct au système. Dans le cas présent le verrouillage serait en fonctionnement par défaut et la carte magnétique serait fournie aux pompiers ou à tout autre ayant droit pour le supprimer le temps de leur utilisation de l'hydrant; mais nul n'aurait accès à l'eau s'il ne dispose pas de cette carte. Ce dispositif pourrait également être couplé à un compteur magnétique qui permettrait de relever à distance une éventuelle consommation d'eau sur l'hydrant.

On va maintenant décrire la réalisation d'un dispositif de sécurisation selon l'invention. Cette invention nécessite qu'un logement 11 soit prévu lors de construction de la canalisation de façon à y installer de façon étanche une serrure dont le pêne est apte à se déplacer radialement vers la partie supérieure du clapet 7. Dans la position de verrouillage le clapet est immobilisé en position fermée; dans la position de déverrouillage le pêne laisse le clapet se mouvoir vers le haut et libérer l'eau.

En second lieu il est nécessaire de prévoir un accès au dispositif de verrouillage pour pouvoir y introduire un moyen de commande tel qu'une clé, même si ce dispositif se trouve implanté profondément dans le sol.

La mise en service se passe alors de façon tout à fait classique avec l'action d'une clé pour verrouiller ou déverrouiller le pêne ou la canne portant le pêne et ainsi interdire ou autoriser l'ouverture du clapet et la circulation de l'eau.

D'autres variantes sont possibles, comme par exemple une sécurisation réalisée par une commande magnétique des mouvements du pêne 10. Dans cette version une couronne d'aimantation est introduite par exemple sur la paroi interne de la canalisation 3 ou sur le corps 9 du dispositif de verrouillage. Cette aimantation est susceptible d'être mise en service ou hors service par le personnel autorisé. De son côté le pêne 10 est muni d'un élément ferromagnétique, comme par exemple une plaque, de façon à répondre à des sollicitations en provenance de la couronne d'aimantation.

Lors de l'activation de l'aimantation le pêne est sollicité pour se déplacer vers la position verrouillée. Lorsque l'aimantation est supprimée il tend alors à retourner vers la position déverrouillée, sous l'action par exemple d'une force de rappel élastique installée à cet effet.

Il est également envisageable de coupler les deux types de sécurisation évoqués ci-dessus de façon à améliorer la protection de l'hydrant. Pour cela il convient toutefois de permettre l'actionnement du dispositif de verrouillage par l'un ou l'autre des deux dispositifs, indépendamment de l'autre. Il est alors nécessaire de prévoir un mécanisme de débrayage de la clé pour pouvoir conserver le verrouillage par le système magnétique alors même que le système mécanique est sollicité dans le sens du déverrouillage. D'une façon générale la sécurisation recherchée doit prévoir qu'une priorité à la fermeture sera donnée l'un sur l'autre aux deux systèmes.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre des revendications.

## Revendications

1. Dispositif de sécurisation d'un hydrant d'incendie comprenant une canalisation (3), un tube de commande (4) muni à son extrémité inférieure d'un robinet vanne constitué par un clapet (7) apte à permettre ou à interdire l'alimentation de ladite canalisation (3) en eau à partir du réseau principal, ledit clapet comportant une face supérieure (8) sensiblement plane ou tronconique,
**caractérisé en ce qu'**un moyen de verrouillage (10) est positionné au niveau de ladite surface supérieure (8) et peut se déployer radialement par rapport audit tube de commande de façon, en position de verrouillage, à bloquer le déplacement axial dudit clapet (7).

2. Dispositif de sécurisation selon la revendication 1 dans lequel le moyen de verrouillage (10) est un pêne commandé par une serrure dont le corps (9) forme avec la canalisation (3) une enceinte étanche (11).

3. Dispositif de sécurisation selon la revendication 2 dans lequel la serrure est distante du pêne et dans lequel le pêne est actionné en rotation par l'intermédiaire d'une canne sensiblement verticale, ladite canne étant commandée par ladite serrure.

4. Dispositif de sécurisation selon la revendication 2 ou 3 dans laquelle ladite serrure ne s'ouvre qu'en présence d'un signal magnétique ou électromagnétique fourni par une source extérieure.

5. Dispositif de sécurisation selon la revendication 1 dans lequel le moyen de verrouillage (10) est muni d'éléments ferromagnétiques et dans lequel la canalisation (3) porte un système d'actionnement par aimantation susceptible de déployer radialement ledit moyen de verrouillage.

6. Dispositif de sécurisation selon la revendication 4 dans lequel le moyen de verrouillage (10) est un pêne commandé par une serrure et dans lequel le mécanisme d'actionnement par aimantation et le mécanisme d'actionnement par la serrure sont tous deux prioritaires l'un par rapport à l'autre pour la fermeture.

## Claims

1. A device for securing a fire hydrant, comprising a duct (3), a control pipe (4) provided at the lower end with a gate valve including a gate (7) for allowing or preventing the water supply of said duct (3) from the main network, said gate including an essentially planar or frusto-conical upper face (8),
**characterized in that** a locking means (10) is provided at the level of said upper surface (8) and can extend radially relative to said control pipe in order to prevent, in the locking position, the axial displacement of said gate (7).

2. The securing device according to claim 1, in which the locking means (10) is a bolt controlled by a lock whereof the body (9) forms a sealed enclosure (11) with the duct (3).

3. The securing device according to claim 2, in which the lock is remote from the bolt and in which the bolt is actuated in rotation via an essentially vertical bar, said bar being controlled by said lock.

4. The securing device according to claim 2 or 3, in which said lock only opens in the presence of a magnetic or electromagnetic signal provided by an outside source.

5. The securing device according to claim 1, in which the locking means (10) is provided with ferromagnetic elements and in which the duct (3) supports a magnetization actuation system capable of radially extending said locking means.

6. The securing device according to claim 4, in which the locking means (10) is a bolt controlled by a lock and in which the magnetization actuation mechanism and the lock actuation mechanism both have priority in relation to the other for closing.

## Patentansprüche

1. Vorrichtung zur Sicherung eines Hydranten, umfassend eine Rohrleitung (3), ein Steuerrohr (4), das an seinem unteren Ende mit einem Absperrschieber versehen ist, der aus einer Ventilklappe (7) besteht, die dazu geeignet ist, die Versorgung der Rohrleitung (3) mit Wasser aus dem Hauptnetz zuzulassen oder zu untersagen, wobei die Ventilklappe eine Oberseite (8) aufweist, die im Wesentlichen eben oder kegelstumpfförmig ist,
**dadurch gekennzeichnet, dass** ein Verriegelungsmittel (10) an der oberen Oberfläche (8) positioniert ist und im Verhältnis zu dem Steuerrohr radial ausfahren kann, um in einer Verriegelungsposition die Axialverschiebung der Ventilklappe (7) zu blockieren.

2. Sicherungsvorrichtung nach Anspruch 1, wobei das Verriegelungsmittel (10) ein Riegel ist, der von einem Schloss gesteuert wird, dessen Körper (9) mit der Rohrleitung (3) eine dichte Einfassung (11) bildet.

3. Sicherungsvorrichtung nach Anspruch 2, wobei das Schloss von dem Riegel entfernt ist, und wobei der Riegel über einen im Wesentlichen senkrechten Rohrstock drehbar betätigt wird, wobei der Rohrstock von dem Schloss gesteuert wird.

4. Sicherungsvorrichtung nach Anspruch 2 oder 3, wobei das Schloss sich nur öffnet, wenn ein magnetisches oder elektromagnetisches Signal vorliegt, das von einer äußeren Quelle bereitgestellt wird.

5. Sicherungsvorrichtung nach Anspruch 1, wobei das Verriegelungsmittel (10) mit ferromagnetischen Elementen versehen ist, und wobei die Rohrleitung (3) ein System zur Betätigung durch Magnetisierung trägt, welches in der Lage ist, das Verriegelungsmittel radial auszufahren.

6. Sicherungsvorrichtung nach Anspruch 4, wobei das Verriegelungsmittel (10) ein Riegel ist, der von einem Schloss gesteuert wird, und wobei der Mechanismus zur Betätigung durch Magnetisierung und der Mechanismus zur Betätigung durch das Schloss beide für das Schließen gegenseitig vorrangig sind.
